# EUROPÄISCHE PATENTSCHRIFT

(11) **EP 0 864 469 B1**
(45) Veröffentlichungstag und Bekanntmachung des Hinweises auf die Patenterteilung: **17.10.2001**
(21) Anmeldenummer: 98104027.2
(22) Anmeldetag: 06.03.1998
(51) Int. Cl.: B60R 21/26

(54) **Gasgenerator für eine Sicherheitseinrichtung**
Gas generator for a safety device
Générateur de gaz pour dispositif de sécurité

(30) Priorität: 08.03.1997 DE 19709597
(43) Veröffentlichungstag der Anmeldung: 16.09.1998
(73) Patentinhaber: TRW Airbag Systems GmbH & Co. KG, 84544 Aschau am Inn (DE)
(72) Erfinder: Unterforsthuber, Karl, D-82041 Oberhaching (DE); Sommer, Karl-Heinz, D-82131 Stockdorf (DE); Hofbauer, Ingrid, D-80805 München (DE); Schönhuber, Georg, D-84565 Oberneukirchen (DE)
(74) Vertreter: Sulzbach, Werner, Dipl.-Chem. Dr.

(56) Entgegenhaltungen:
- EP-A- 0 672 562
- DE-A- 4 012 893
- US-A- 3 972 545
- US-A- 4 530 516
- US-A- 5 585 597

## Beschreibung

Die Erfindung betrifft einen Gasgenerator für eine Sicherheitseinrichtung mit einer Vorrichtung zum Niederhalten von Brennstoffgranulat in einer Brennkammer. Ein bevorzugter Anwendungsbereich sind Gasgeneratoren für Kfz-Sicherheitseinrichtungen wie Gurtstraffer, Airbags, Überrollbügel oder Stromversorgungstrenneinheiten, welche zur Erzeugung eines definierten Gasvolumens im Falle einer Auslösung mit einem entsprechenden Brennstoffgranulat, vorzugsweise in Tablettenform, gefüllt werden.

Ein Groygenerator gemäß dem Oberbegriff des Anspruchs 1 ist aus DE 40 12 893 A1 bekannt.

Gasgeneratoren sollen zunehmend universell für unterschiedliche Anwendungen, z.B. im Fahrer- oder Beifahrer-Airbag, eingesetzt werden, in denen unterschiedliche Gasvolumina mit unterschiedlicher Geschwindigkeit bereitgestellt werden. Das Brennstoffgranulat wird hierzu in unterschiedlicher Konzentration, Menge und chemischer Zusammensetzung verwandt. Durch Füllniveauschwankungen kann es jedoch zu Relativbewegungen des Brennstoffgranulats in der Brennkammer, zu einer uneinheitlichen Verteilung des Granulats und zu Materialabrieb am Brennstoffgranulat kommen. Dadurch wird die geforderte Zünd- und Druckausbreitung beeinträchtigt. Aus diesen Gründen ist eine Arretierung des Brennstoffgranulats erforderlich.Außerdem können durch eine Arretierung Rasselgeräusche des Granulats in der Brennkammer vermieden werden.

Wie der DE 42 27 547 Al entnommen werden kann, wird zum Ausgleich des Füllniveaus und zur Vermeidung der Relativbewegungen ein Füllkörper, in der Schrift bezeichnet als Volumenausgleichsmittel, verwendet. Dieser Füllkörper, meist aus elastischem Material, nimmt das in den meisten Fällen vorhandene, mehr oder minder große Leervolumen ein und gleicht Niveauschwankungen aus. Der bekannte Füllkörper kann aber nur das Füllnivau innerhalb bestimmter Grenzen gut ausgleichen. Bei größeren Niveauunterschieden muß die Füllkörpergröße oder -menge entsprechend angepaßt werden. Dies erhöht die Materialkosten, aber insbesondere auch den Fertigungsaufwand, da Vorrichtungen zur Füll-niveauerkennung und -dosierung notwendig werden.

Außerdem erweist sich die Verwendung von Füllkörpern zur Arretierung von Brennstoffgranulat in Brennkammern auch deshalb als ungeeignet, da im Falle eines Brennstoffabbrandes die chemischen, physikalischen und an den Austrittsöffnungen auch die strömungsdynamischen Eigenschaften des erzeugten Gasgemisches negativ beeinflußt werden.

Der in der DE 40 12 893 A1 beschriebene Gasgenerator weist im wesentlichen den gleichen Aufbau auf wie der aus der DE 42 27 547 A1 bekannte Gasgenerator. Als Füllkörper wird in diesem Fall federnde Stahlwolle verwendet, die auch als Vorfilter wirken kann. Auf die Stahlwolle ist ein scheibenförmiges Drahtgewebe aufgelegt.

Die US-A-4 530 516 beschreibt einen Gasgenerator, bei dem zum Ausgleich eines Restvolumens ein perforiertes, scheibenförmiges Polsterkissen aus einem Keramikfasermaterial eingebracht ist.

Aus der US-A-3 972 545 ist schließlich ein Gasgenerator bekannt, bei dem eine Filterlage aus mehreren Feinfiltern sowie mehreren Grobfiltern in die Brennkammer eingebracht sind. Die Filterlagen sind einer die Brennkammer verschließenden Lochscheibe benachbart angeordnet.

Aufgabe der Erfindung ist es daher, Gasgeneratoren mit einer Vorrichtung zum Niederhalten von Brennstoffgranulat in einer Brennkammer, insbesondere von Gasgeneratoren für Kfz-Sicherheitseinrichtungen, aufzuzeigen, welche unabhängig von dem benötigten Füllniveau das Brennstoffgranulat definiert und zuverlässig arretiert.

Die Aufgabe wird durch die in Anspruch 1 angegebenen Merkmale gelöst. Die Haltefläche ist dabei als ein mit Löchern versehenes, flaches oder gewelltes Gebilde, vorzugsweise metallisches Gewebe oder gelochtes Blech, zu verstehen, dessen maximale Gitterlochstärke kleiner als das Brennstoffgranulat ist, um die erfindungsgemäße Arretierung des Brennstoffgranulats zu gewährleisten. Über die Maschenweite eines solchen Gitters bzw. die Anzahl und Größe der Löcher kann außerdem das Abströmen des Verbrennungsgases in den leeren Teil der Brennkammer gesteuert und grob gefiltert werden. Die Haltefläche ist so gestaltet, daß eine form- und kraftschlüssige Verbindung zur Brennkammerwand entsteht.

Zur Erzeugung einer form- und kraftschlüssigen Verbindung zwischen der Haltefläche und der Brennkammerwand stehen vielfältige bekannte Lösungen zur Verfügung, wie zum Beispiel eine entsprechende Preßpassung, unterstützt durch ein Anschrägen des Halteflächenrandes oder durch Federringe. Die Arretierung des Brennstoffgranulats erfolgt unabhängig vom Füllniveau durch ein Einpressen der scheibenförmigen Haltefläche in die Brennkammer, wobei Einpreßkraft und -geschwindigkeit so zu wählen sind, daß das Brennstoffgranulat entsprechend zusammengeschoben und arretiert, eine Zerstörung des Brennstoffgranulats oder Abrieb aber weitgehend vermieden wird. Ergänzend kann die Haltefläche zum Filtern des ausströmenden Gases verwendet werden, um das Ausströmen von Brennrückständen zu vermeiden.

Eine vorteilhafte Weiterbildung der Erfindung besteht darin, daß durch entsprechende Dimensionierung der form- und kraftschlüssigen Verbindung und der Haltefläche in bezug auf die Materialart und die Summe der Lochflächen das Lösen der Arretierung bei Überschreiten eines vorbestimmten Grenzdruckes ermöglicht wird. Dadurch können unerwünscht hohe Druckspitzen, welche durch ungleichmäßigen Abbrand oder fehlerhafte Brennstoffgranulate entstehen, abgefangen werden.

Die Erfindung wird in Ausführungsbeispielen anhand der Zeichnungen näher erläutert. Es zeigen:
Figur 1 einen Rohr-Gasgenerator gemäß dem Stand der Technik mit herkömmlichem Füllkörper,
Figur 2 einen Rohr-Gasgenerator mit einer erfindungsgemäßen gitterförmigen Haltefläche zur Arretierung,
Figur 3 eine erfindungsgemäße gitterförmige Haltefläche für einen Rohr-Gasgenerator mit abgewinkelter und angeschrägter Außenkante,
Figur 4 einen Rohr-Gasgenerator mit einer erfindungsgemäßen gitterförmigen Haltefläche nach der Überschreitung des zulässigen Druckgrenzwertes,
Figur 5 einen Teilschnitt durch einen Ring-Gasgenerator mit einer gitterförmigen Haltefläche als Hohlringscheibe entsprechend der hohlzylindrischen Brennkammer,
Figur 6 einen Rohrgasgenerator gemäß einer weiteren Ausführungsform der Erfindung, und
Figur 7 einen Querschnitt durch den Rohrgasgenerator gemäß Figur 6.

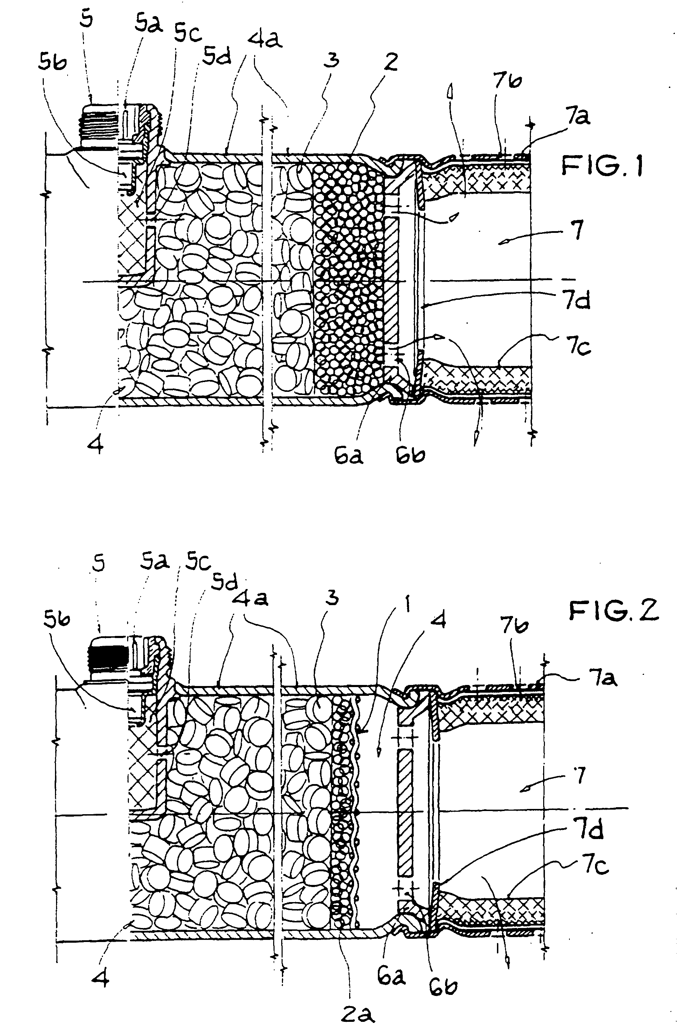

Figur 1 zeigt eine Ausführung eines Rohr-Gasgenerators entsprechend der DE 42 27 547 Al. Wie alle Gasgeneratoren, weist diese Ausführungsform eine Zündeinrichtung 5, eine Brennkammer 4 und einen Überströmteil 6a mit Ausströmöffnungen 6b auf. In der Brennkammer 4 befindet sich üblicherweise ein Brennstoff 3 in Granulatform. Die Figur 1 zeigt darüber hinaus innerhalb der Zündeinrichtung 5 elektrische Anschlüsse 5a, eine Primärladung 5b, eine Sekundärladung 5c und eine Zündöffnung 5d im Gehäuse 5e der Zündeinrichtung 5. Das beim Abbrand des Brennstoffs 3 entstehende Gas kann bei entsprechendem Druck in der Brennkammer 4 über die Ausströmöffnungen 6b in die Filterkammer 7 entweichen. Die Filterkammer 7 wird umgeben von einem Filterrohr 7a mit Ausströmöffnungen 7b und einem Filter 7c, welcher durch ein Ringblech 7d arretiert ist. Das Brennstoffgranulat wird mit Hilfe eines Füllkörpers 2 niedergehalten.

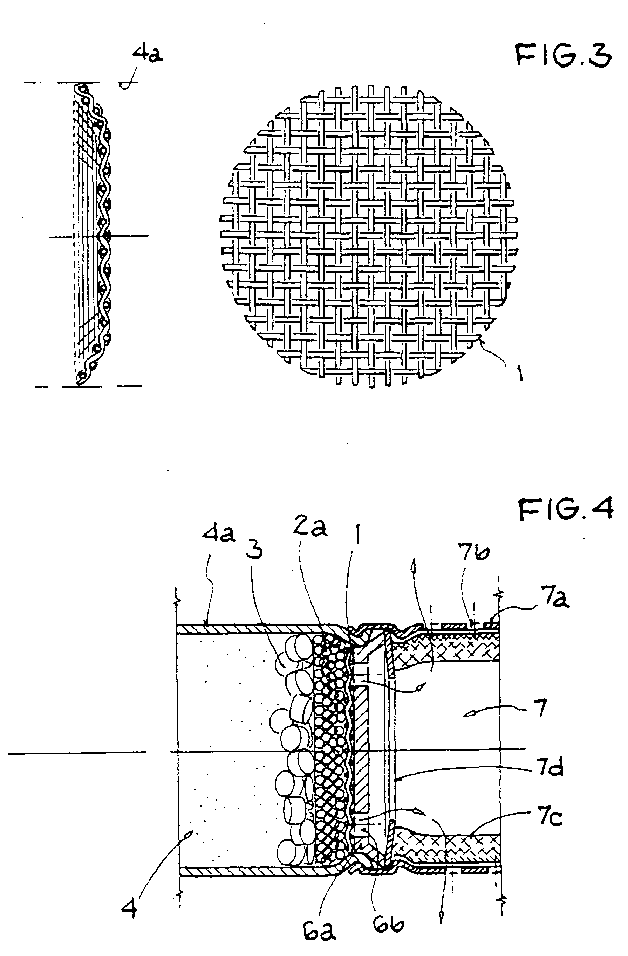

Der in Figur 2 gezeigte Gasgenerator entspricht in seinem Aufbau mit Ausnahme der erfindungsgemäßen Änderungen dem in Figur 1 gezeigten Gasgenerator gemäß dem Stand der Technik. Gemäß der Erfindung wird das Brennstoffgranulat 3 durch die mit Gitterlöchern versehene, scheibenförmige Haltefläche 1 in der Brennkammer 4 arretiert, wobei eine entsprechende form- und kraftschlüssige Verbindung zwischen den Außenkanten der gitterförmigen Haltefläche 1 und der Brennkammerwand 4a besteht. Die Haltefläche 1 drückt federnd und mit einer Vorspannung auf das Brennstoffgranulat. Relativbewegungen des Brennstoffgranulats 3 innerhalb der Brennkammer 4 sind damit unabhängig vom Füllniveau ausgeschlossen. Dadurch werden Abrieb und Rasselgeräusche vermieden und durch die definierte Lage des Brennstoffgranulats 3 eine gewünschte Zünd- und Druckausbreitung gewährleistet. Dies führt zu einer Einsparung des Füllkörpers, einer einfacheren Fertigung ohne besondere Füllniveaumeßeinrichtungen und zu einer Anwendbarkeit des Gasgenerators und der Fertigungsanlage für verschiedene Brennstoffgranulatmengen und Konzentrationen, wie dies im Airbagbereich erforderlich ist. Über die Ausströmöffnungen 6b im Überströmteil 6a kann das Gas in die Filterkammer 7 entweichen. Die Filterkammer 7 wird umgeben von einem Filterrohr 7a mit Ausströmöffnungen 7b und einem Filter 7c, welcher durch ein Ringblech 7d arretiert ist. Die Zündeinrichtung 5 ist mit ihren Bestandteilen elektrische Anschlüsse 5a, Primärladung 5b, Sekundärladung 5c und Zündöffnung 5d in Figur 2 ebenfalls zu erkennen.

Die zusätzliche Verwendung einer dünnen Lage elastischen Füllstoffs 2a vor der Haltefläche 1 ist zur Dämpfung möglich.

Figur 3 zeigt eine erfindungsgemäße mit Gitterlöchern versehene Haltefläche 1 passend für den in Figur 2 dargestellten Rohrgasgenerator. Die Haltefläche 1 gemäß Figur 3 ist als ein Drahtgewebe ausgeführt, welches am Rand zur besseren Arretierung an der Brennkammerwand abgeschrägt und scharfkantig gestaltet ist. Größe, Werkstoff, Webart und Toleranzen sind entsprechend der Größe des Brennstoffgranulats und des gewünschten Grenzdruckes ausgewählt. Steigt der Druck innerhalb dieses Grenzwertes an, reichen die Öffnungsflächen des Gitters aus, um einen Druckausgleich innerhalb der gesamten Brennkammer zu gewährleisten.

Figur 4 zeigt einen Rohr-Gasgenerator gemäß Figur 1, bei dem die Haltefläche 1 aufgrund der Überschreitung des Druckgrenzwertes an das Ende der Brennkammer gedrückt und so die Druckspitze entsprechend abgeschwächt wurde.

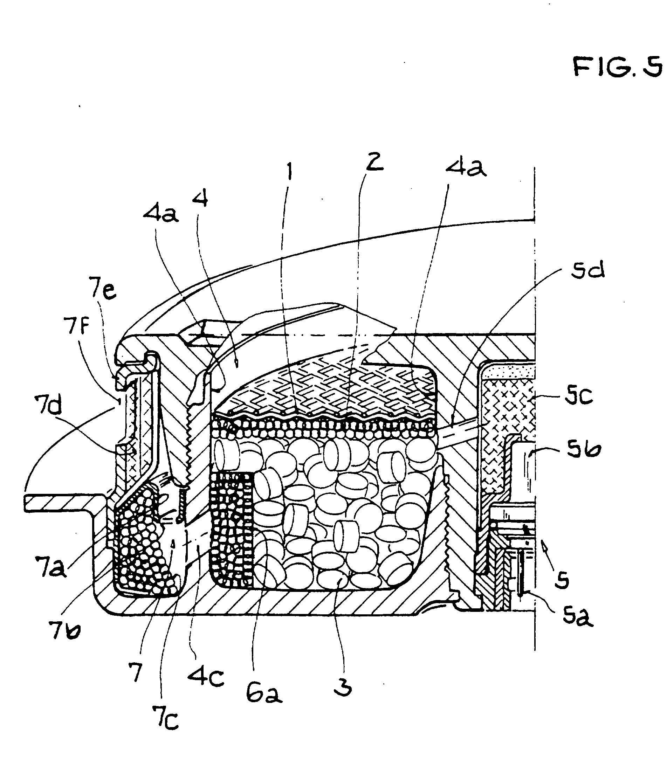

Figur 5 zeigt nun einen Teilschnitt durch einen Ring-Gasgenerator, in den die Haltefläche 1 als Hohlringscheibe, entsprechend der hohlzylindrischen Brennkammer 4, ausgestaltet ist. Die Haltefläche 1 ist hier nicht vor dem Überströmbereich 6, bestehend aus einem Überströmfilter 6a und einer Überströmöffnung 4c im Brennkammerboden 4b, sondern im oberen, der Zündeinrichtung 5 gegenüberliegenden Bereich der Brennkammer 4 angeordnet, um auch diese Möglichkeit zu zeigen. Die Zündeinrichtung 5 ist mit ihren Bestandteilen elektrische Anschlüsse 5a, Primärladung 5b, Sekundärladung 5c und Zündöffnung 5d in Figur 5 ebenfalls dargestellt. Die Brennkammer 4 wird gebildet durch einen Brennkammerdeckel 4a und einen damit verschraubten Brennkammerboden 4b, welcher seitliche Überströmöffnungen 4c zur Filterkammer 7 aufweist. Der Filter 7c ist in der Filterkammer 7 vor einem Umleitblech 7a angeordnet, welches wiederum Ausströmöffnungen 7b aufweist. Durch diese strömt das vorgefilterte Gas zu einem Feinfilter 7d, gehalten von einem Außenblech 7e, und dann durch die Auslaßöffnung 7f.

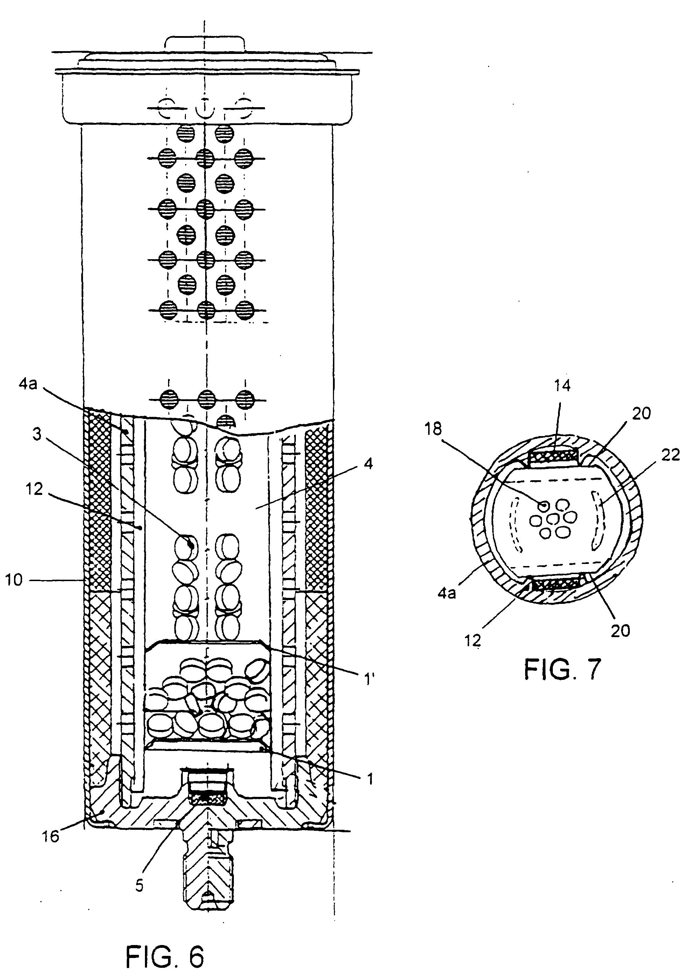

Der in Figur 6 gezeigte Gasgenerator weist ein rohrförmiges Außengehäuse 10 mit einer darin gebildeten Brennkammer 4 auf. Die Brennkammer 4 ist mit Brennstoffgranulat 3 in Tablettenform gefüllt. Die Brennkammer 4 wird von einer Brennkammerwand 4a begrenzt, an deren Innenseite in axialer Richtung verlaufende Längsrippen 12 ausgebildet sind. Zwischen den Längsrippen ist ein streifenförmiger Filter 14 angeordnet. Eine Zündeinrichtung 5 ist in einen die Brennkammer 4 verschließenden Deckel 16 integriert und ragt in die Brennkammer 4 hinein.

Die Haltefläche 1 besteht bei der hier gezeigten Ausführungsform aus einem Lochblech mit Gitterlöchern 18, deren Durchmesser kleiner als der Durchmesser des Brennstoffgranulats 3 bzw. der Treibstofftabletten ist (Figur 7). Die Haltefläche weist bei der hier gezeigten Ausführungsform zwei gegenüberliegende gerade Kanten 20 auf, die in die Längsrippen 12 eingreifen und so die form- und kraftschlüssige Verbindung erzeugen. Im Bereich der geraden Kanten 20 ist die Haltefläche 1 zudem abgewinkelt, bevorzugt in einem Winkel von etwa 30°, wodurch das Einspreizen der Kanten 20 in die Längsrippen 12 noch begünstigt wird. Zur Versteifung kann die Haltefläche 1 zudem noch mit vorzugsweise teilkreisförmigen Sicken 22 versehen sein, die im wesentlichen quer zu den geraden Kanten verlaufen.

Nach der Befüllung der Brennkammer 4 mit dem Brennstoffgranulat 3 wird die Haltefläche 1 in die Brennkammer 4 eingepreßt. Sie steht dabei unter Vorspannung und drückt federnd auf das Brennstoffgranulat 3. Auf diese Weise wird eine einfache Befüllung des Gasgenerators mit Brennstoffgranulat ohne aufwendige Füllhöhenmessung ermöglicht und gleichzeitig werden Rasselgeräusche durch loses Brennstoffgranulat 3 vermieden. Für Rohrgasgeneratoren mit reduzierter Leistung kann ohne aufwendige Änderungen des Herstellungsprozesses eine verminderte Menge an Brennstoffgranulat 3 eingesetzt werden. Die Position der Haltefläche bei einem Gasgenerator mit verminderter Leistung ist in Figur 6 ebenfalls dargestellt und mit dem Bezugszeichen 1' gekennzeichnet. Zwischen die Haltefläche 1 und das Brennstoffgranulat 1 kann zudem ein Füllkörper am elastischen Material (hier nicht gezeigt) angeordnet sein.

Alternativ zu der hier dargestellten Ausführungsform kann die Haltefläche 1 an ihrem Rand auch mit auch mit Ausbauchungen versehen sein, die eine punktförmige Belastung auf die Brennkammerwand ausüben und so die form- und kraftschlüssige Verbindung bewirken. In diesem Fall können die geraden Kanten sowie die Längsrippen an der Brennkammerwnad entfallen.

Generell ist eine konstruktive Anpassung der gitterförmigen Haltefläche an die Form und Abmessungen der Brennkammer, die Verwendung von verschiedenen Arretierungsmöglichkeiten sowie die Anpassung des Gittermaterials, der Gitterart und -stärke für den konkreten Anwendungsfall jederzeit möglich. Auch die Verwendung von Federblechen mit einer entsprechend hohen Anzahl von Löchern ist vorstellbar. Dadurch läßt sich eine Vorspannung der gitterförmigen Haltefläche 1 erzielen, welche federnd auf das Brennstoffgranulat wirkt und so einen Ausgleich von Füllniveauabsenkungen während der Produktlebensdauer gewährleistet. Außerdem lassen sich die Arretierungskräfte und der Grenzdruckwert präzise einstellen.

## Patentansprüche

1. Gasgenerator für eine Sicherheitseinrichtung, insbesondere für ein Fahrzeuginsassen-Rückhaltesystem, mit einer von einer Brennkammerwand (4a) begrenzten und mit Brennstoffgranulat (3) gefüllten Brennkammer (4) sowie einem in der Brennkammer (4) angeordneten Mittel zum Niederhalten des Brennstoffgranulats, wobei das Mittel zum Niederhalten des Brennstoffgranulats eine scheibenförmige Haltefläche (1) mit Gitterlöchern (18) umfaßt, die vorgespannt ist und federnd auf das Brennstoffgranulat (3) drückt, wobei die Gitterlöcher (18) einen kleineren Durchmesser als das Brennstoffgranulat (3) aufweisen,
**dadurch gekennzeichnet, daß** die Haltefläche in die Brennkammer (4) eingepreßt und mit der Brennkammerwand (4a) form- und kraftschlüssig verbunden ist und daß die Haltefläche (1) unabhängig vom Füllniveau des Brennstoffgranulats einpreßbar ist.

2. Gasgenerator nach Anspruch 1, **dadurch gekennzeichnet, daß** die Haltefläche (1) einen abgeschrägten Rand aufweist.

3. Gasgenerator nach Anspruch 1 oder 2, **dadurch gekennzeichnet, daß** die form- und kraftschlüssige Verbindung zwischen der Haltefläche (1) und der Brennkammerwand (4a) so eingestellt ist, daß bei Überschreiten eines oberen Grenzdruckes nach einer Zündung des Brennstoffgranulats (3) diese Verbindung gelöst wird und die Haltefläche (1) die gesamte Brennkammer (4) freigibt.

4. Gasgenerator nach einem der vorhergehenden Ansprüche, **dadurch gekennzeichnet, daß** die Haltefläche (1) aus einem Metallgewebe besteht.

5. Gasgenerator nach einem der Ansprüche 1 bis 3, **dadurch gekennzeichnet, daß** die Haltefläche (1) ein Lochblech ist.

6. Gasgenerator nach Anspruch 5, **dadurch gekennzeichnet, daß** das Lochblech durch Sicken (22) versteift ist.

7. Gasgenerator nach Anspruch 5 oder 6, **dadurch gekennzeichnet, daß** in der Brennkammerwand (4a) jeweils gegenüberliegende Längsrippen (12) ausgebildet sind, und daß das Lochblech zwei gegenüberliegende, gerade Kanten (20) aufweist, wobei die Kanten (20) in die Längsrippen (12) eingreifen und so die form- und kraftschlüssige Verbindung ausbilden.

8. Gasgenerator nach Anspruch 7, **dadurch gekennzeichnet, daß** das Lochblech im Bereich der geraden Kanten (20) abgewinkelt ist.

9. Gasgenerator nach einem der Ansprüche 5 oder 6, **dadurch gekennzeichnet, daß** das Lochblech an seinem Rand mit Ausbauchungen versehen ist, welche in die Brennkammerwand eingreifen.

## Claims

1. A gas generator for a safety device, in particular for a vehicle occupant restraint system, comprising a combustion chamber (4) delimited by a combustion chamber wall (4a) and filled with a propellant granule (3), as well as a means arranged in the combustion chamber (4) for holding down the propellant granule, the means for holding down the propellant granule including a disc-shaped holding face (1) having grid holes (18) and being pre-stressed and pressing elastically onto the propellant granule (3), the grid holes (18) having a diameter smaller than the propellant granule (3), **characterized in that** the holding face is pressed into the combustion chamber (4) and is connected with the combustion chamber wall (4a) in a form- and force-fitting manner and **in that** the holding face (1) can be pressed in irrespective of the filling level of the propellant granule.

2. The gas generator according to claim 1, **characterized in that** the holding face (1) has a chamfered edge.

3. The gas generator according to claim 1 or 2, **characterized in that** the form- and force-fitting connection between the holding face (1) and the combustion chamber wall (4a) is adjusted such that upon exceeding an upper pressure limit after the propellant granule (3) has been ignited, this connection is detached and the holding face (1) exposes the entire combustion chamber (4).

4. The gas generator according to any of the preceding claims, **characterized in that** the holding face (1) consists of a metal fabric.

5. The gas generator according to any of the claims 1 to 3, **characterized in that** the holding face (1) is a perforated metal sheet.

6. The gas generator according to claim 5, **characterized in that** the perforated metal sheet is stiffened by crimped portions (22).

7. The gas generator according to claim 5 or 6, **characterized in that** longitudinal ribs (12) are formed in the combustion chamber wall (4a) which each lie opposite each other, and **in that** the perforated metal sheet has two opposite straight edges (20) which engage the longitudinal ribs (12) and in this way form the form- and force-fitting connection.

8. The gas generator according to claim 7, **characterized in that** the perforated metal sheet is angled in the region of the straight edges (20).

9. The gas generator according to either of the claims 5 and 6, **characterized in that** the perforated metal sheet is provided on its edge with bulges which engage into the combustion chamber wall.

## Revendications

1. Générateur de gaz pour un dispositif de sécurité, en particulier un système de retenue des passagers d'un véhicule, comportant une chambre de combustion (4) délimitée par une paroi (4a) de chambre de combustion et remplie de granulat de combustible (3), ainsi qu'un moyen agencé dans la chambre de combustion pour retenir vers le bas le granulat de combustible, le moyen pour retenir vers le bas le granulat de combustible comprenant une surface de retenue (1) en forme de disque avec des perforations (18), qui est précontrainte et qui appuie de manière élastique sur le granulat de combustible (3), les perforations (18) ayant un diamètre inférieur au granulat de combustible (3) , **caractérisé en ce que** la surface de retenue est pressée dans la chambre de combustion (4) et reliée par coopération de formes et de forces avec la paroi (4a) de la chambre de combustion, et **en ce que** la surface de retenue (1) peut être pressée indépendamment du niveau de remplissage du granulat de combustible.

2. Générateur de gaz selon la revendication 1, **caractérisé en ce que** la surface de retenue (1) présente un bord en biseau.

3. Générateur de gaz selon la revendication 1 ou la revendication 2, **caractérisé en ce que** la liaison par coopération de formes et de forces entre la surface de retenue (1) et la paroi (4a) de la chambre de combustion est réglée de telle sorte qu'en cas de dépassement d'une pression limite supérieure après l'amorçage du granulat de combustible, cette liaison est défaite et la surface de retenue (1) libère la chambre de combustion (4) toute entière.

4. Générateur de gaz selon l'une quelconque des revendications précédentes, **caractérisé en ce que** la surface de retenue (1) est en un tissu métallique.

5. Générateur de gaz selon l'une quelconque des revendications 1 à 3, **caractérisé en ce que** la surface de retenue (1) est une tôle perforée.

6. Générateur de gaz selon la revendication 5, **caractérisé en ce que** la tôle perforée est renforcée par des moulures (22).

7. Générateur de gaz selon la revendication 5 ou la revendication 6, **caractérisé en ce que** dans la paroi (4a) de la chambre de combustion sont réalisées des nervures longitudinales (12) respectivement opposées et **en ce que** la tôle perforée présente deux arêtes (20) droites opposées, les arêtes (20) s'engageant dans les nervures longitudinales (12) et formant ainsi la liaison par coopération de formes et de forces.

8. Générateur de gaz selon la revendication 8, **caractérisé en ce que** la tôle perforée est coudée dans zone des arêtes (20) droites.

9. Générateur de gaz selon l'une ou l'autre des revendication 5 et 6, **caractérisé en ce que** sur son bord, la tôle perforée est pourvue de bosses qui s'engagent dans la paroi de la chambre de combustion.
